# EUROPÄISCHE PATENTSCHRIFT

(11) **EP 0 424 763 B1**
(45) Veröffentlichungstag und Bekanntmachung des Hinweises auf die Patenterteilung: **29.12.1993**
(21) Anmeldenummer: 90119660.0
(22) Anmeldetag: 13.10.1990
(51) Int. Cl.: B65D 71/00, B65D 85/672, G11B 23/027

(54) **Sammelverpackung für auf Kerne gewickelte Magnetbänder**
Package for magnetic tapes wound onto cores
Emballage pour bandes magnétiques enroulées sur des noyaux

(30) Priorität: 27.10.1989 DE 8912749 U; 27.10.1989 DE 8912747 U
(43) Veröffentlichungstag der Anmeldung: 02.05.1991
(73) Patentinhaber: BASF Magnetics GmbH, 68165 Mannheim (DE)
(72) Erfinder: Toral, José, Dipl.-Ing., W-8000 München 70 (DE); Brandstetter, Hermann, Dipl.-Ing., W-8000 München 70 (DE); Thiele, Hartmut, W-8000 München 71 (DE); Liepold, August, Dipl.-Ing., W-8000 München 70 (DE); Gruber, Leo, Dipl.-Ing., W-8131 Pentenried (DE)
(74) Vertreter: Langfinger, Klaus-Dieter, Dr.

(56) Entgegenhaltungen:
- EP-A- 0 055 356
- DE-U- 8 900 709
- DE-U- 8 912 747
- US-A- 4 708 246

## Beschreibung

Die Erfindung bezieht sich auf eine Verpackung für mehrere auf mit inneren Bohrungen versehene Wickelkerne oder Spulen aufgewickelte bandförmige Aufzeichnungsträger, bestehend aus Kunststoff-Paletten sowie gegebenenfalls in der Achsmitte hochgezogene Naben, deren Durchmesser dem lichten Innendurchmesser der Bohrungen der Wickelkerne entspricht und wobei die Verpackung durch eine darüberziehbare Schrumpffolie verschließbar ist.

Weltweit werden von den Magnetband-Fabriken sogenannte Rohwarenverpackungen verkauft. In diesen ist das Magnetband auf Kerne, beispielsweise flanschlose Wickelkerne (entweder die sogenannten NAB-Kerne oder stapelbare Wickelkerne gemäß US 4 081 151 oder andere) aufgewickelt. Diese sogenannten Pancakes werden zur Zeit entweder einzeln verpackt oder in Sammelgebinden geschrumpft oder durch verschiedene Kartonagen gehalten. Eine derartige Verpackung ist aus der GB-A-157 6973 bekannt.

Der Nachteil der oben geschilderten Sammelverpackung besteht darin, daß die Magnetbänder, obwohl die äußeren Lagen durch Styroporteller geschützt sind und außerdem die aufeinandergestapelten Pancakes durch eine Schrumpffolie verschlossen werden, doch nicht optimal geschützt sind. Folgende Fehler können bei der Lagerung beziehungsweise beim Transport auftreten:
- Durch die geschrumpfte Verpackung stehen die äußeren Ränder unter Spannung und üben auf die in ihnen enthaltenen Magnetbänder einen Druck aus, so daß die Magnetbandwickel eine tellerförmige Verformung erleiden können.
- Bei liegendem Transport, das heißt, waagrecht liegendem Bandwickel beziehungsweise Wickelkern, können Stufenbildung beziehungsweise Wickelabrutscher entstehen und so das Magnetband beschädigen.

Aus der EP-A-0 320 751 sind Sammelverpackungen der genannten gattungsmäßigen Art bekannt, bei denen wiederverwendbare verspannbare oder verschraubbare Kernstützen die oben aufgeführten Nachteile vermeiden helfen. Dies bedingt jedoch Teilevielfalt und daraus resultierende Preisnachteile für diese Art von Verpackung.

Aus der US-A-4 708 246 ist eine Sammelverpackung für Pancakes bekannt, bei der die Zwischenlagen zwischen den Pancakes deren Form angepaßt sind. Dies bedingt jedoch einen großen Verbrauch an Verpackungsmaterial. Ähnliche Nachteile hat eine Sammelverpackung für aufeinandergestapelte zerbrechliche Gegenstände gemäß US 2 776 772.

Aus der DE-GM 89 00 709 ist eine Verpackung der gleichen gattungsmäßigen Art bekannt, bei der die Innenflächen der polygonförmigen Paletten im Bereich des Bandwickels konusförmig so abgeschrägt sind, daß bei geschrumpfter Verpackung die Bandwickel an den Paletten gleichmäßig anliegen. Diese Art der Verpackung hat wiederum als Nachteil, daß sie zu geringe Stabilität beim Zusammenstellen zu mehreren Transportgebinden bietet, daß die innenliegenden Pancakes nur ungenügend durch die Schrumpffolie geschützt sind und das die Schweißstelle der Schrumpffolie Anlaß zu Beschädigungen der Verpackung und des Inhalts gibt. Außerdem haben die meisten der genannten Verpackungen den Nachteil, das sie nur manuell aufgenommen und abgesetzt werden können.

Daher bestand die Aufgabe, eine Sammelverpackung zu finden, die nicht die oben genannten Nachteile aufweist, sondern einen optimalen Schutz der Pancakes gewährleistet, die möglichst universell zu verwenden ist und preis- und raumgünstig den Transport von Verpackungen auch bei Pancakes größeren Durchmessers sowie bei Magnetbandspulen, gewährleistet.

Eine weitere Aufgabe bestand darin, eine Sammelverpackung zu finden, die mehrfach zu verwenden ist.

Erfindungsgemäß wurden die Aufgaben gelöst mit einer Verpackung mit den im kennzeichnenden Teil der Ansprüche genannten Merkmalen. Weitere Einzelheiten der Erfindung gehen aus der Beschreibung und den Zeichnungen hervor. Im folgenden wird die Erfindung anhand der Zeichnungen näher erläutert und zwar zeigt
- Figur 1: eine perspektivische Darstellung der erfindungsgemäßen Verpackung
- Figur 2: eine Draufsicht auf den Innenraum der Verpackung
- Figur 3: einen Querschnitt durch einen Teil der Palette
- Figur 4: eine schematische Darstellung eines Greifers für die Verpackung.
- Figur 5: eine perspektivische Darstellung einer anderen erfindungsgemäßen Ausführung.

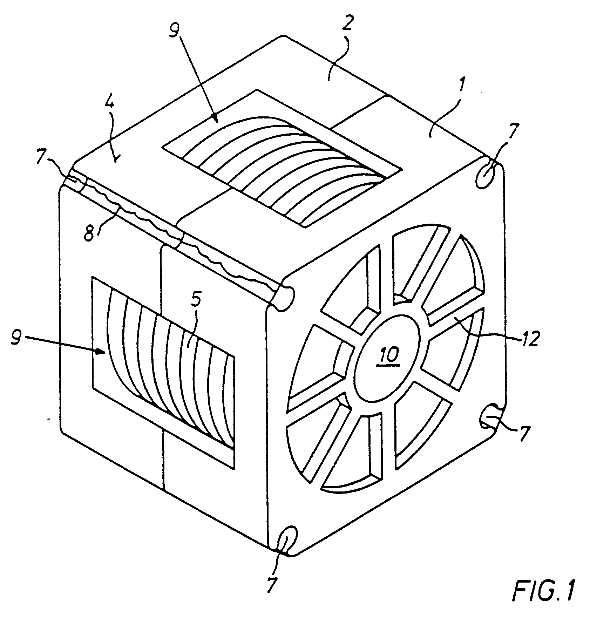

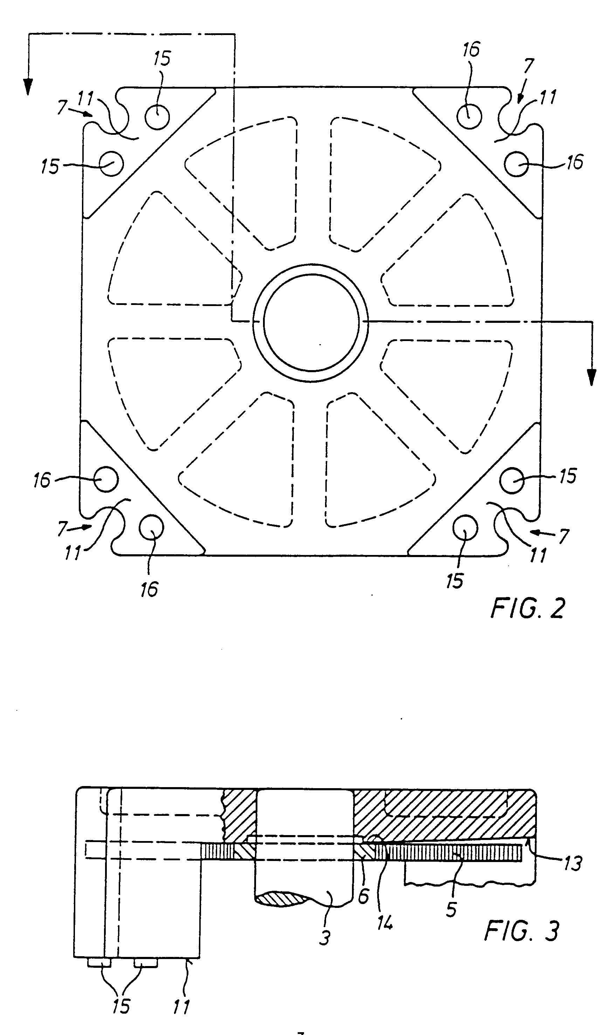

Die Verpackung (Figur 1) besteht aus zwei praktisch identischen quaderförmigen Paletten (1, 2), welche in einer bevorzugten Ausführung an ihren Schmalseiten Ausschnitte enthalten, die sich beim Zusammensetzen der beiden Palettenhälften zu einem Fenster (9) ergänzen. An den Außenflächen der Breitseiten besitzen die Paletten Materialverdünnungen mit speichenförmigen Verstärkungen (12) dazwischen, die von der Achsmitte (10) ausgehen, wie sie im übrigen aus dem Stand der Technik bereits bekannt sind. Gemäß Figur 2 und 3 haben die Paletten (1, 2) an den Ecken ihrer Innenseiten Zapfen (15) und ihnen zugeordnete Löcher (16) zum Ineinandergreifen beim Zusammensetzen beider Hälften.

Der Innenraum der Palette (Figur 2) ist im wesentlichen der Form der Bandwickel nachgebildet, entweder tellerförmig mit einer zentralen Auflagefläche (14) für die Wickelkerne (6) analog der bereits erwähnten DE 26 55 254 oder mit Anlageflächen (11) an den Ecken der Palette. Weiterhin können die Auflageflächen (13) der auf den Wickelkernen (6) aufgewickelten Bandwickel (5) wie in der bereits erwähnten DE-GM 89 00 709 konusförmig nach außen abgeschrägt sein (Figur 3), wobei im geschrumpften Zustand der Verpackung der Bandwickel ganz an der Auflagefläche anliegt.

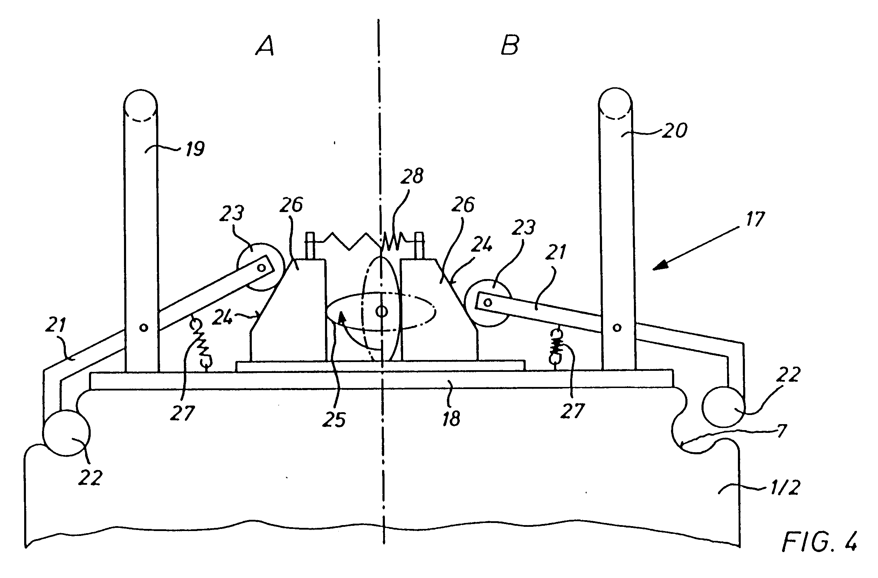

Ein wesentlicher Teil der Erfindung besteht darin, daß die Palette an ihren Außenkanten rillenartige Kerben (7) aufweist. Diese haben einen mehrfachen Zweck. zum einen kann nach dem Auflegen der aufeinander gestapelten Pancakes (5) in eine Palette (1), dem Durchstecken einer Kernstütze (3) und dem Verschließen durch die zugeordnete andere Palette (2) die Schrumpffolie (4) aufgeschrumpft werden. Dabei sitzt die Schweißnaht (8) der Schrumpffolie in einer der Kerben (7), so daß keine Beschädigungen von benachbarten Verpackungen beim Zusammenstellen zu größeren Transportgebinden eintreten können. Zum anderen dienen die Kerbungen als Griffmulden zum Herausheben der Verpackung beim Verarbeiten entweder per Hand oder mit einem zweiarmigen Greifer (17), welcher in zwei benachbarte Rillen (7) eingreift. Dieser Greifer ist in einer zweckmäßigen Ausführung (Figur 4) wie folgt aufgebaut. Auf einer Platte (18), die auf der Oberseite der Verpackung aufgesetzt wird, befinden sich parallel zu dieser verschiebbar gelagert zwei Keile (26) mit schräger Ablauffläche (24) nach außen. Auf dieser läuft jeweils eine an dem Ende eines zweiarmigen Hebels (21) befestigte Rolle (23), wobei der Hebel durch eine Feder (27) in Richtung Platte (18) vorgespannt ist. Am anderen Ende des Hebels (21) greift ein Einhakelement (22) in die Kerbe (7) der Verpackung ein. Jeder der Hebel (21) hat seine Achse an einem aus der Platte (18) ragenden Pfosten (19, 20). Diese Pfosten sind entweder mit einem (nicht gezeichneten) Tragegriff oder einer Hebevorrichtung oder ähnlichem verbunden. Die beiden Keile (26), welche durch eine Feder (28) miteinander verbunden sind werden mittels eines Exzenters (25) entweder in die Absetzstellung B (rechts) oder die Eingriffsstellung A (links) des Greifers (17) betätigt. Weiterhin dienen die Rillen (7) als Indexierung für automatische Befüllung der Paletten mit den Pancakes sowie zur Entlüftung nach dem Aufschrumpfen der Folie (4).

Die erfindungsgemäße Verpackung bietet als weitere Vorteile:
- durch die stabile Ausführung können auf einer Transportpalette mehrere Verpackungsgebinde beispielsweise fünf übereinander gestapelt werden, wobei gegebenenfalls zwischen den einzelnen Gebinden eine Zwischenlage eingebracht werden kann
- die Verpackung und der Transport auch größerer Pancakedurchmesser (bis 14 - 16 Zoll) werden möglich
- durch eine entsprechenden Dimensionierung der Paletten können Pancakes mit Wickelkernen unterschiedlicher Dicke verwendet werden. Beispielsweise können in einer Verpakkung 30 Pancakes auf je 4 mm breiten Wickelkernen oder 8 Pancakes auf je 12 mm breiten Wickelkernen transportiert werden, so daß für unterschiedliche Sorten die gleiche Verpackung verwendbar ist. Ebenso können auf Spulen aufgewickelte Magnetbänder (mit Halbzoll- bis Zweizoll-Breite) verpackt werden
- als Kernstütze (3) genügt bei dieser Art der Verpackung ein billiger Styroporkern
- infolge der gegenüber einer Verpackung gemäß DE-GM 89 00 809 verbesserten Stabilität der Paletten kann die Wandstärke des Styropors verkleinert werden, so daß zusätzlich ein deutlicher Raumgewinn beim Zusammenstellen der Verpackungsgebinde erzielt wird
- durch die Art der Schrumpfung hat die neuerungsgemäße Verpackung zusätzlich ein gefälliges Aussehen und erlaubt durch die Fensteröffnungen, an denen die Schrumpffolie glatt anliegt, die Beobachtung der Beschriftung an den Außenseiten der Pancakes.

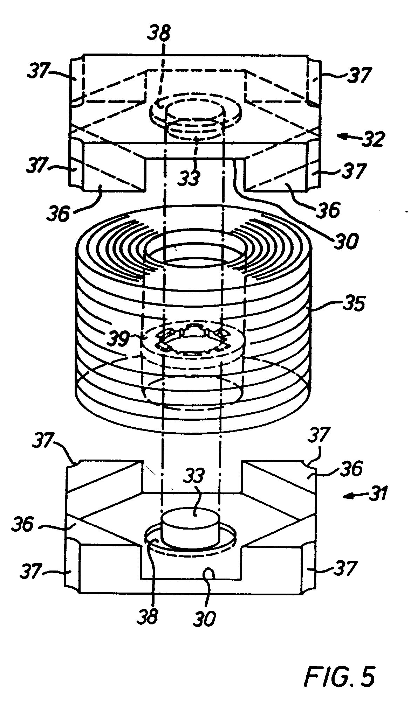

Anschließend wird eine weitere Ausführung der Erfindung anhand der Figur 5 näher erläutert, welche die Verpackung in einer explosionsartigen Darstellung zeigt. Die Verpackung besteht aus zwei im wesentlichen identischen rechteckigen flachen Paletten (31, 32), die an ihren Ecken jeweils in das Innere der Verpackung hineinragende Pfosten (36) besitzen. Diese sind dreieckig ausgebildet mit einem rechten Winkel an der Ecke der Palette. Die Ecke ist vorzugsweise über die gesamte Höhe des Pfostens mit einer Rille (37) versehen. Auf der Innenseite der Paletten befindet sich im Achsmittelpunkt als Nabe ein Kernstummel (33) zur Aufnahme der Wickelkerne (39) mit dem darauf gewickelten Aufzeichnungsträger. Die Höhe des Kernstummels ist mindestens so bemessen wie die Höhe eines Wickelkerns. Die Hohe der Pfosten (36) wird zweckmäßigerweise so gewählt, daß bei einer vorgegebenen Anzahl von aufeinandergestapelten Pancakes (35) bei zusammengefügten Paletten (31,32) die jeweils übereinanderstehenden Enden der Pfosten gerade aufeinander stoßen. Analog wie in der oben beschriebenen Ausführung können die Enden der Pfosten mit (nicht gezeichneten) Zapfen und ihnen zugeordneten Löchern zum Zusammenfügen der Paletten versehen sein. Um die Kernstummel können an der Innenseite der Palette eine oder mehrere rillenartige Vertiefungen (38) zur Aufnahme von axialen Verformungen der Wickelkerne beispielswweise gemäß US-A-4 081 151 vorgesehen sein. Ferner sind an den Seiten Fensteröffnungen (30) vorgesehen.

Um die zusammengefügte Verpackung wird eine aus dem Stand der Technik bekannte (nicht gezeichnete) Schrumpffolie aufgeschrumpft, deren Schweißnaht neuerungsgemäß in eine der Rillen (37) gelegt wird. Auf diese Weise wird eine glatte quaderförmige Verpackung erhalten, die leicht zu stapeln und zu transportieren ist. Zum Transport wird die Verpackung um 90° gekippt, so daß die Pancake-Wickel senkrecht stehen. Beim Entnehmen der Verpackung beim Kunden erleichtern die Rillen das Handling, beispielsweise mittels eines zweiarmigen Greifers zum Eingriff in die seitlichen Rillen (37),wie er in der oben bereits näher beschrieben ist. Die beschriebene Art der Verpackung eignet sich nach Entnahme des Inhalts auch in ökonomischer Weise zum Rücktransport, indem die obere und untere Palette um 45° gegeneinander versetzt gestapelt raumsparend versandt werden kann.

Die Palette besteht bevorzugt aus einem harten Kunststoff wie Acrylnitril-Butadein-Styrol-Copolymer oder Polypropylen. Durch die beschriebene stabile Ausführung ist es möglich, zum Versand beziehungsweise Transport mehrere Lagen der neuer ungsgemäßen Verpackungen übereinander zu stapeln, wobei zwischen zwei Lagen lediglich eine Zwischenlage beispielsweise aus Karton gelegt werden kann.

## Patentansprüche

1. Verpackung für mehrere auf mit inneren Bohrungen versehene Wickelkerne (6) oder Spulen aufgewickelte bandförmige Aufzeichnungsträger (5) bestehend aus Kunststoff-Paletten (1, 2) sowie gegebenenfalls in der Achsmitte (10) hochgezogene Naben (3), deren Durchmesser dem lichten Innendurchmesser der Bohrung der Wickelkerne (6) entspricht und wobei die Verpackung durch eine darüberziehbare Schrumpffolie (4) verschließbar ist, dadurch gekennzeichnet, daß die als identische quaderförmige Schalenhälften ausgebildeten Paletten (1, 2) zusammenfügbar sind, an ihren Kanten rillenartige Kerbungen (7) besitzen, daß der Innenraum der Paletten der äußeren Form der Aufzeichnungsträger (5) nachgebildet ist, und daß die Schweißnaht (8) der Schrumpffolie (4) in einer der Kerbungen (7) ausgebildet ist.

2. Verpackung nach Anspruch 1, dadurch gekennzeichnet, daß die Paletten (1, 2) an ihren vier Schmalseiten fensterartige Ausschnitte (9) besitzen.

3. Verpackung nach den Ansprüchen 1 bis 2, dadurch gekennzeichnet, daß die Paletten sowie die durch die Achsmitte (10) des Aufzeichnungsträger-Stapels durchgezogene Nabe (3) aus Styropor bestehen.

4. Verpackung nach Anspruch 1, dadurch gekennzeichnet, daß die Schalenhälften flache Paletten (31, 32) sind, welche an ihren Ecken je einen dreieckigen Pfosten (36) in Gestalt eines rechtwinkligen Dreiecks zur Aufnahme der Aufzeichnungsträger in den dadurch gebildeten Innenraum besitzen, wobei die Pfosten je eine rillenartige Ausnehmung (37) an ihrem rechten Winkel haben, wobei die Höhe der Pfosten (36) so geschaffen ist, daß bei aufeinandergefügter Verpackung die Enden der Pfosten der gegenüberliegenden Paletten (31, 32) jeweils aufeinanderstoßen und wobei die Nabe ein Kernstummel (33) ist, dessen Höhe mindestens der Höhe eines Wickelkerns (39) entspricht.

5. Verpackung nach Anspruch 4, dadurch gekennzeichnet, daß konzentrisch um den Kernstummel (33) mindestens eine rillenförmige Vertiefung (38) ausgeprägt ist zur Aufnahme der axialen Verformungen der Wickelkerne (39).

6. Verpackung nach den Ansprüchen 4 und 5, dadurch gekennzeichnet, daß die Paletten aus Acrylnitril-Butadein-Styrol-Copolymer, Polypropylen oder einem anderen harten Kunststoff bestehen.

## Claims

1. A pack for a plurality of recording media (5) in tape form, wound up onto winding hubs (6) or reels provided with internal bores, comprising plastic pallets (1, 2) and hubs (3) possibly drawn up in the axial center (10) and of a diameter which corresponds to the clear inside diameter of the bore of the winding hubs (6), it being possible to seal the pack by a shrink film (4) which can be pulled over it, wherein the pallets (1, 2), designed as identical parallelepipedal shell halves, can be joined together and have groove-like notches (7) at their edges, wherein the interior space of the pallets is made to match the outer shape of the recording media (5), and wherein the weld seam (8) of the shrink film (4) is formed in one of the notches (7).

2. The pack as claimed in claim 1, wherein the pallets (1, 2) have window-like cutouts (9) on their four narrow sides.

3. The pack as claimed in claims 1 or 2, wherein the pallets and the hub (3) drawn through the axial center (10) of the recording media stack consist of Styropor.

4. The pack as claimed in claim 1, wherein the shell halves are flat pallets (31, 32) which have at each of their corners a triangular post (36) in the form of a right-angled triangle for receiving the recording media in the interior space thereby formed, the posts each having a groove-like recess (37) at their right angle, the height of the posts (36) being made such that, with the pack fitted together, the ends of the posts of the opposite pallets (31, 32) in each case butt against each other, the hub being a hub stub (33), the height of which corresponds at least to the height of one winding hub (39).

5. The pack as claimed in claim 4, wherein at least one groove-shaped depression (38) is impressed concentrically around the hub stub (33) for receiving the axial deformations of the winding hubs (39).

6. The pack as claimed in claims 4 and 5, wherein the pallets consist of acrylonitrile-butadiene-styrene copolymer, polypropylene or some other hard plastic.

## Revendications

1. Emballage pour plusieurs supports d'enregistrements (5) en forme de bandes enroulées sur des tambours d'enroulement (6) ou des bobines pourvues d'alésages intérieurs, composés de palettes en matière plastique (1,2) ainsi que, le cas échéant, de moyeux (3) montant dans l'axe central (10), dont le diamètre correspond au diamètre intérieur libre de l'alésage des tambours d'enroulements (6) et l'emballage étant susceptible d'être obturé au moyen d'une feuille rétractable (4) pouvant être étiré sur lui, caractérisé en ce que les palettes (1, 2) réalisées sous forme de demi-coquilles carrées identiques sont susceptibles d'être assemblées, qu'elles comportent sur leurs arêtes des entailles (7) en forme de cannelures, en ce que l'espace intérieur des palettes est formé pour épouser la forme extérieure des supports d'enregistrements (5) et en ce que le cordon de soudure (8) de la feuille rétractable (4) est réalisé dans l'une des entailles (7).

2. Emballage selon la revendication 1, caractérisé en ce que les palettes (1, 2) comportent sur leurs quatre petits cotés des ouvertures en fenêtres.

3. Emballage selon les revendications 1 à 2 , caractérisé en ce que les palettes ainsi que le moyeu (3), traversant l'axe central (10), de l'empilement du support d'enregistrement sont en styropore.

4. Emballage selon la revendication 1, caractérisé en ce que les demi-coquilles sont des palettes plates (31,32) comportant à chacun de leurs angles un poteau triangulaire (36) se présentant sous la forme d'un triangle rectangle, pour recevoir les supports d'enregistrements dans l'espace intérieur ainsi formé, les poteaux présentant sur leurs angles droits un évidement (37) en forme de cannelure, la hauteur des poteaux (36) étant telle que, lors de l'assemblage de l'emballage, les extrémités des poteaux viennent chacune en butée sur la palette (31,32) opposée et où le moyeu est un tronçon de tambour (33) dont la hauteur correspond au moins à la hauteur d'un tambour d'enroulement (39).

5. Emballage selon la revendication 4, caractérisé en ce qu'au moins une cavité en cannelure (38) est creusée concentriquement autour du tronçon de noyau (33), en vue de supporter les déformations axiales des tambours d'enroulement (39).

6. Emballage selon les revendications 4 et 5, caractérisé en ce que les palettes sont réalisées en copolymère d'acrylnitrile-butadéine-styrène, en propylène ou en une autre matière synthétique dure.
